# EUROPEAN PATENT SPECIFICATION

(11) **EP 3 004 238 B1**
(45) Date of publication and mention of the grant of the patent: **04.12.2019**
(21) Application number: 14727483.1
(22) Date of filing: 29.05.2014
(51) Int. Cl.: C08L 77/06, C08L 77/02, C08K 7/14

(54) **FILLED POLYMER COMPOSITIONS FOR MOBILE ELECTRONIC DEVICES**
GEFÜLLTE POLYAMIDZUSAMMENSETZUNGEN FÜR MOBILE ELEKTRONISCHE GERÄTE
COMPOSITIONS DE POLYAMIDE RENFORCÉES POUR DES DISPOSITIFS ÉLECTRONIQUES MOBILES

(30) Priority: 05.06.2013 US 201361831323 P; 23.08.2013 EP 13181597
(43) Date of publication of application: 13.04.2016
(73) Proprietor: Solvay Specialty Polymers USA, LLC., Alpharetta, GA 30005-3914 (US)
(72) Inventor: VERFAILLIE, Geert J., B-9661 Parike (BE); DESIO, Glenn P., Marietta, Georgia 30062 (US)
(74) Representative: Benvenuti, Federica
(86) International application number: PCT/EP2014/061205
(87) International publication number: WO 2014/195226

(56) References cited:
- EP-A1- 2 789 591
- EP-A1- 2 896 659
- WO-A1-2013/092628
- US-A- 3 917 488
- US-A1- 2008 132 633
- US-A1- 2008 153 954
- US-A1- 2008 167 415
- US-A1- 2009 062 452
- US-A1- 2010 227 122
- US-A1- 2010 256 262
- US-A1- 2011 263 777
- US-A1- 2013 022 786
- DATABASE WPI Week 199843 Thomson Scientific, London, GB; AN 1998-501758 XP002718501, & JP H10 219026 A (NITTO BOSEKI CO LTD) 18 August 1998 (1998-08-18)
- DATABASE WPI Week 201166 Thomson Scientific, London, GB; AN 2011-M01852 XP002718502, & WO 2011/115031 A1 (TOYO BOSEKI KK) 22 September 2011 (2011-09-22)
- DATABASE WPI Week 201028 Thomson Scientific, London, GB; AN 2010-E08295 XP002718503, & JP 2010 084007 A (MITSUBISHI ENG PLASTICS KK) 15 April 2010 (2010-04-15)
- DATABASE WPI Week 201076 Thomson Scientific, London, GB; AN 2010-N70283 XP002718504, & JP 2010 248406 A (TOYOBO KK) 4 November 2010 (2010-11-04)

## Description

### TECHNICAL FIELD

The present invention relates to high performance polymer compositions featuring an outstanding balance of mechanical and processing performance which make them very well suited for the manufacture of thin parts. In particular, the present invention relates to polymer compositions comprising at least 20 weight percent of a certain type of glass fibers having a non-circular cross section and an elastic modulus of at least 76 GPa as measured according to ASTM C1557-03 and to mobile electronic devices comprising at least one part made of said polymer composition.

### BACKGROUND ART

Nowadays, mobile electronic devices such as mobile phones, tablets, laptop computers, MP3 players, and so on, are in widespread use. While a lot of progress has been made in making smaller electronic devices, there is more and more demand for higher quality and greater serviceability of these mobile electronic devices. Nowadays, mobile electronic devices are getting thinner and smaller for even more portability and convenience, while at the same time becoming increasingly capable of performing more advanced functions and services, both due to the technological development of the devices and the network systems.

This evolution comes with a number of conflicting requirements which are all considered to be important factors for the end customer. Basically, the device should be as small and light-weight as possible, provide more and more advanced functions, have a long battery life, and have a user-friendly interface. Still, there is only so much space in an electronic device, and, in order to be competitive the elements of the device must be carefully designed, assembled and packaged.

However, while for convenience sake, it is often desirable that these devices be small and lightweight, they still need to possess a certain structural strength so that they will not be damaged in normal handling and occasional drops. Thus, usually built into such devices are structural parts whose primary function is to provide strength and/or rigidity and/or impact resistance to the device, and perhaps also provide mounting places for various internal components or external parts of the mobile electronic device case. Because of the strength and rigidity requirements for these members, they are usually made of a low density metal such as magnesium or aluminum. However, use of metals for these parts comes with certain drawbacks. Some of these less dense metals such as magnesium are somewhat expensive and their use sometimes limits design flexibility.

While synthetic resins can overcome some of the above mentioned limitations of metals, they do not usually have the strength and/or stiffness to be used for the manufacture of structural parts in mobile electronic devices. As a result, improved structural parts for mobile electronic devices are needed.

US 2010/0291381 relates to structural members for portable electronic devices comprising synthetic resin compositions whose surfaces are coated at least partially by a metal. A long list of synthetic resins is disclosed.

Indeed, polymer compositions have been used for many years in the manufacture of mobile electronic devices. Acrylonitrile butadiene styrene (ABS) polymer, polycarbonate, polyesters such as PBT or polyolefins have been widely used in the past, sometimes used in combination with metal.

However, as various technologies evolve and improve at a very high pace, in parallel with the miniaturization of the devices, the commodity resins exemplified above do not fulfill the market needs anymore. The manufacturing technology must therefore evolve and improve to meet the increased manufacturing demands. These increased demands include, as explained above, lighter and smaller structures but with comparable or even improved overall properties, involving thus the use of higher performance materials for the manufacture of parts of mobile electronic devices.

The main properties required for the manufacture of parts of mobile electronic devices include good flow properties, high impact strength, high stiffness (and in particular high flexural modulus) and good elongation properties. Also, in some instances, if the structural parts of mobile electronic devices have complicated shapes that may warp during formation, as in injection molding, it may be advantageous to use a synthetic resin composition which is specifically designed to have low warpage.

The warpage is a term designating dimensional distortion in the molded parts leading to their concave or convex curvature. An inherent shrinkage occurs during any injection molding process because the density of the polymer varies from the processing temperature to the ambient temperature. During injection molding, the variation in shrinkage creates internal stresses which lead to the warpage of the part upon ejection from the mold. If the shrinkage throughout the part is uniform, the molded part will not deform or warp, it will simply become smaller. However, achieving low and uniform shrinkage is a complicated task due to the presence and interaction of many factors such as molecular and fiber orientations, mold cooling, part and mold designs, and process conditions.

In addition, there is a great demand to reduce the overall costs of the mobile electronic devices and the price of the high performance materials should also be therefore maintained within acceptable ranges.

US 2011/263777 discloses a polyamide resin composition reinforced with glass fiber produced by the melt kneading of a mixture where 60 to 80 parts by weight of glass fiber bundles (B) comprising a glass fiber having a flat cross section whose flatness degree is 1.5 to 8 and having an ignition loss at 625°C for 0.5 hour of not more than 0.8% by weight are added to 40 to 20 parts by weight of polyamide (A), characterized in that, during the above melt kneading, a polyamide-reactive silane coupling agent (C) is added to the above mixture in a rate of 0.1 to 1.0% by weight of the above glass fiber bundles (B).

Therefore, new polymer compositions suitable for the manufacture of mobile electronic device and structural parts thereof are desired in order to overcome the above-described shortcomings.

### SUMMARY OF INVENTION

The present invention thus relates to a polymer composition (C) comprising:
- at least 20 weight percent of at least one polymer, and
- at least 20 weight percent of glass fibers, based on the total weight of the polymer composition (C) ;
wherein the glass fibers have a non-circular cross section and an elastic modulus of at least 76 GPa as measured according to ASTM C1557-03,
wherein said at least one polymer is selected from the group consisting of
(1) a blend of a first and a second polyamide, wherein the first polyamide is selected from aliphatic polyamides and the second polyamide is selected from aromatic polyamides,
   wherein said aromatic polyamide is a polyamide which comprises more than 35 mol %, of recurring units (R_{PA}) which are aromatic recurring units that comprises at least one aromatic group; and
   wherein said aliphatic polyamide is a polyamide that comprises aliphatic recurring units exclusively and said aliphatic recurring units are derived from at least one aliphatic dicarboxylic acid, and at least one aliphatic diamine, and/or said aliphatic recurring units are derived from aliphatic aminocarboxylic acids and/or aliphatic lactams; and
(2) a polyamide PA6,10.

The invention also pertains to an article, and in particular a mobile electronic device comprising at least one part made of the polymer composition (C).

The invention finally pertains to a process for making the polymer composition (C) and a process for making the above mentioned article made from such composition.

### BRIEF DESCRIPTION OF THE DRAWING

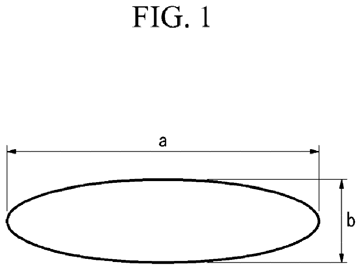

Fig. 1 is a schematic view showing the cross-sectional aspect ratio of a glass fiber of the polymer composition (C).

### DETAILED DESCRIPTION OF THE PRESENT INVENTION

### The polymer composition (C)

The polymer composition (C) comprises at least 20 weight percent of at least one polymer, based on the total weight of the polymer composition (C). The nature of said polymer being as detailed above.

The at least one polymer is preferably present in an amount of at least 25 wt. %, more preferably at least 30 wt. %, still more preferably at least 35 wt. %, and most preferably at least 40 wt. %, based on the total weight of the polymer composition (C).

The at least one polymer is also present in an amount of advantageously at most 80 wt. %, preferably at most 75 wt. %, more preferably at most 70 wt. %, still more preferably at most 65 wt. %, yet most preferably at most 60 wt. % and most preferably at most 55 wt. %, based on the total weight of the polymer composition (C).

Excellent results were obtained when the at least one polymer was present in the polymer composition (C) in an amount from about 30 to about 60 wt. %, preferably from about 35 to about 55 wt. %, based on the total weight of the polymer composition (C).

The at least one polymer of the polymer composition (C) is chosen from polyamide as defined in Claim 1.

Embodiments when more than one polymer different from those defined in Claim 1 is present in the polymer composition (C), are outside the scope of the claims.

More specifically, such polymer may be selected from the group consisting of polyamides, polyesters, polyaryletherketones, polyimides, polyetherimides, polyamideimide, liquid crystalline polymers, polycarbonates, polyolefins, polyphenylene oxide, polysulfones, polyacrylates, acrylonitrile butadiene styrene polymer, polyoxymethylene, polystyrene, polyarylene sulfide, polyvinylidene fluoride, polytetrafluoroethylene, polyvinylidene chloride and polyvinyl chloride.

The at least one polymer of the polymer composition (C) is selected from the group consisting of polyamides as defined in Claim 1.

### Polyamides

The expression "polyamide" is intended to denote any polymer which comprises recurring units (R_{PA}) which are derived from the polycondensation of at least one dicarboxylic acid component (or derivative thereof) and at least one diamine component, and/or from the polycondensation of aminocarboxylic acids and/or lactams.

The expression 'derivative thereof' when used in combination with the expression 'carboxylic acid' is intended to denote whichever derivative which is susceptible of reacting in polycondensation conditions to yield an amide bond. Examples of amide-forming derivatives include a mono- or di-alkyl ester, such as a mono- or di-methyl, ethyl or propyl ester, of such carboxylic acid; a mono-or di-aryl ester thereof; a mono- or di-acid halide thereof; and a mono-or di-acid amide thereof, a mono- or di-carboxylate salt.

In certain preferred embodiment, the polyamide of the polymer composition (C) comprises at least 50 mol %, preferably at least 60 mol %, more preferably at least 70 mol %, still more preferably at least 80 mol % and most preferably at least 90 mol % of recurring units (R_{PA}). Excellent results were obtained when the polyamide of the polymer composition (C) consisted of recurring units (R_{PA}).

The polymer composition (C) may comprise more than one polyamide as defined in Claim 1.

The polyamide of the polymer composition (C) may be an aliphatic polyamide polymer or an aromatic polyamide polymer as defined in Claim 1.

For the purpose of the present invention, the expression "aromatic polyamide polymer" is intended to denote a polyamide which comprises more than 35 mol %, preferably more than 45 mol %, more preferably more than 55 mol %, still more preferably more than 65 mol % and most preferably more than 75 mol % of recurring units (R_{PA}) which are aromatic recurring units.

For the purpose of the present invention, the expression "aromatic recurring unit" is intended to denote any recurring unit that comprises at least one aromatic group. The aromatic recurring units may be formed by the polycondensation of at least one aromatic dicarboxylic acid with an aliphatic diamine or by the polycondensation of at least one aliphatic dicarboxylic acid with an aromatic diamine, or by the polycondensation of aromatic aminocarboxylic acids.

For the purpose of the present invention, a dicarboxylic acid or a diamine is considered as "aromatic" when it comprises one or more than one aromatic group.

Non limitative examples of aromatic dicarboxylic acids are notably phthalic acids, including isophthalic acid (IA), terephthalic acid (TA) and orthophthalic acid (OA), 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene, the 2,6-naphthalene dicarboxylic acid, 2,7-naphthalene dicarboxylic acid,1,4-naphthalene dicarboxylic acid, 2,3-naphthalene dicarboxylic acid, 1,8-naphthalene dicarboxylic acid, 1,2-naphthalene dicarboxylic acid.

Among aliphatic dicarboxylic acids, mention can be notably made of oxalic acid [HOOC-COOH, malonic acid (HOOC-CH₂-COOH), adipic acid [HOOC-(CH₂)₄-COOH], succinic acid [HOOC-(CH₂)₂-COOH], glutaric acid [HOOC-(CH₂)₃-COOH], 2,2-dimethyl-glutaric acid [HOOC-C(CH₃)₂-(CH₂)₂-COOH], 2,4,4-trimethyl-adipic acid [HOOC-CH(CH₃)-CH₂-C(CH₃)₂-CH₂-COOH], pimelic acid [HOOC-(CH₂)₅-COOH], suberic acid [HOOC-(CH₂)₆-COOH], azelaic acid [HOOC-(CH₂)₇-COOH], sebacic acid [HOOC-(CH₂)₈-COOH], undecanedioic acid [HOOC-(CH₂)₉-COOH], dodecanedioic acid [HOOC-(CH₂)₁₀-COOH], tetradecanedioic acid [HOOC-(CH₂)₁₁-COOH], cis- and/or trans-cyclohexane-1,4-dicarboxylic acid and/or cis- and/or trans-cyclohexane-1,3-dicarboxylic acid (CHDA).

According to preferred embodiments of the present invention, the dicarboxylic acid is preferably aromatic and comprises advantageously at least one phthalic acid selected from the group consisting of isophthalic acid (IA), and terephthalic acid (TA). Isophthalic acid and terephthalic acid can be used alone or in combination. The phthalic acid is preferably terephthalic acid, optionally in combination with isophthalic acid.

Non limitative examples of aliphatic diamines are typically aliphatic alkylene diamines having 2 to 18 carbon atoms, which are advantageously selected from the group consisting of 1,2-diaminoethane, 1,2-diaminopropane, propylene-1,3-diamine, 1,3-diaminobutane, 1,4-diaminobutane, 1,5-diaminopentane, 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 1,6-diaminohexane, 1,7-diaminoheptane, 1,8-diamino-octane, 1,6-diamino-2,5-dimethylhexane, 1,6-diamino-2,4-dimethylhexane, 1,6-diamino-3,3-dimethylhexane, 1,6-diamino-2,2-dimethylhexane, 1,9-diaminononane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,10-diaminodecane, 1,8-diamino-1,3-dimethyloctane, 1,8-diamino-1,4-dimethyloctane, 1,8-diamino-2,4-dimethyloctane, 1,8-diamino-3,4-dimethyloctane, 1,8-diamino-4,5-dimethyloctane, 1,8-diamino-2,2-dimethyloctane, 1,8-diamino-3,3-dimethyloctane, 1,8-diamino-4,4-dimethyloctane, 1,6-diamino-2,4-diethylhexane, 1,9-diamino-5-methylnonane, 1,11-diaminoundecane and 1,12-diaminododecane.

Also, the aliphatic diamine may be chosen from cycloaliphatic diamines such as isophorone diamine (also known as 5-amino-(1-aminomethyl)-1,3,3-trimethylcyclohexane), 1,3-cyclohexanebis(methylamine) (1,3-BAMC), 1,4-cyclohexanebis(methylamine) (1,4-BAMC), 4,4-diaminodicyclohexylmethane (PACM), and bis(4-amino-3-methylcyclohexyl)methane.

According to preferred embodiments of the present invention, the aliphatic diamine is preferably selected from the group consisting of 1,6-diaminohexane (also known as hexamethylene diamine), 1,9-diaminononane, 1,10-diaminodecane, 1,11-diaminoundecane and 1,12-diaminododecane.

Among aromatic diamines, mention can be notably made of metaphenylene diamine (MPD), para-phenylene diamine (PPD), 3,4'-diaminodiphenyl ether (3,4'-ODA), 4,4'-diaminodiphenyl ether (4,4'-ODA), meta-xylylene diamine (MXDA), and para-xylylene diamine (PXDA).

According to preferred embodiments of the present invention, the aromatic diamine is preferably meta-xylylene diamine (MXDA).

In addition, aromatic aminocarboxylic acids or derivatives thereof may also be used for the manufacture of the polyamide of the polymer composition (C), which is generally selected from the group consisting of 4-(aminomethyl)benzoic acid and 4-aminobenzoic acid, 6-aminohexanoic acid, 1-aza-2-cyclononanone, 1-aza-2-cyclododecanone, 11-aminoundecanoic acid, 12-aminododecanoic acid, 4-(aminomethyl)benzoic acid, cis-4-(aminomethyl)cyclohexanecarboxylic acid, trans-4-(aminomethyl)cyclohexanecarboxylic acid, cis-4-aminocyclohexanecarboxylic acid and trans-4-aminocyclohexanecarboxylic acid.

Non limitative examples of polyamides of the polymer composition (C) are: the polymer of adipic acid with meta-xylylene diamine (also known as PAMXD6 polymers, which are notably commercially available as IXEF® polyarylamides from Solvay Specialty Polymers U.S.A, L.L.C.), the polymers of phthalic acid, chosen among isophthalic acid (IA) and terephthalic acid (TA) and at least one aliphatic diamine such as 1,6-diaminohexane (notably commercially available as AMODEL® polyphthalamides from Solvay Specialty Polymers U.S.A, L.L.C.), the polymer of terephthalic acid with 1,9-nonamethylene diamine, the polymer of terephthalic acid with 1,10-decamethylene diamine, the polymer of terephthalic acid with dodecamethylene diamine, the polymer of 1,11-undecane diamine with terephthalic acid, the copolymer of terephthalic acid and isophthalic acid with hexamethylene diamine, the copolymer of terephthalic acid with hexamethylene diamine and decamethylene diamine; the copolymer of terephthalic acid and isophthalic acid with hexamethylene diamine and decamethylene diamine; the copolymer of terephthalic acid with decamethylene diamine and 11-amino-undecanoic acid, the copolymer of terephthalic acid with hexamethylene diamine and 11-amino-undecanoic acid; the copolymer of terephthalic acid with hexamethylene diamine and bis-1,4-aminomethylcyclohexane; the copolymer of terephthalic acid with hexamethylene diamine and bis-1,3-aminomethylcyclohexane; the copolymer of hexamethylene diamine with terephthalic acid and 2,6-napthalenedicarboxylic acid; the copolymer of hexamethylene diamine with terephthalic acid and sebacic acid; the copolymer of hexamethylene diamine with terephthalic acid and 1,12-diaminododecanoic acid; the copolymer of hexamethylene diamine with terephthalic acid, isophthalic acid and 1,4-cyclohexanedicarboxylic acid; the copolymer of decamethylene diamine with terephthalic acid and 4-aminocyclohexanecarboxylic acid; the copolymer of decamethylene diamine with terephthalic acid and 4-(aminomethyl)-cyclohexanecarboxylic acid; the polymer of decamethylene diamine with 2,6-napthalenedicarboxylic acid; the copolymer of 2,6-napthalenedicarboxylic acid with hexamethylene diamine and decamethylene diamine; the copolymer of 2,6-napthalenedicarboxylic acid with hexamethylene diamine and decamethylene diamine; the polymer of decamethylene diamine with 1,4-cyclohexanedicarboxylic acid, the copolymer of hexamethylene diamine with 11-amino-undecanoic acid and 2,6-napthalenedicarboxylic acid; the copolymer of terephthalic acid with hexamethylene diamine and 2-methylpentamethylene diamine; the copolymer of terephthalic acid with decamethylene diamine and 2-methylpentamethylene diamine; the copolymer of 2,6-napthalenedicarboxylic with hexamethylene diamine and 2-methylpentamethylene diamine; the copolymer of 1,4-cyclohexanedicarboxylic acid with decamethylene diamine and 2-methylpentamethylene diamine.

For the purpose of the present invention, the expression "aliphatic polyamide polymer" is intended to denote a polyamide that comprises aliphatic recurring units exclusively and said aliphatic recurring units are derived from at least one aliphatic dicarboxylic acid, as mentioned above, and at least one aliphatic diamine, as mentioned above and/or said aliphatic recurring units are derived from aliphatic aminocarboxylic acids and/or aliphatic lactams.

Non limitative examples of aliphatic lactams are notably selected from the group consisting of caprolactam and lauryl lactam.

Examples of aliphatic polyamide polymer are notably selected from the group consisting of PA6, PA 6,6, PA10,10, PA6,10, copolyamide PA 6,6/6, PA 11, PA 12 and PA 10,12.

A first group of aliphatic polyamides are those consisting essentially of recurring units formed by the polycondensation reaction between adipic acid and hexamethylene diamine, commonly known as PA 6,6 and notably commercially available from Solvay Engineering Plastics as TECHNYL® polyamides.

In certain specific embodiment of the present invention, the polymer composition (C) comprises a blend of a first and a second polyamide, and in particular the first polyamide is selected from aliphatic polyamides and the second polyamide is selected from aromatic polyamides. In such a case, the first aliphatic polyamide is preferably selected from the group consisting of PA 6, PA 6,6, PA 10,10, PA 6,10, copolyamide PA 6,6/6, PA 11, PA 12 and PA 10,12, while the second polyamide is preferably selected from polyphthalamides and PAMXD6.

Excellent results were obtained when the two polyamides were a PAMXD6 and PA 6,6.

### Polyesters - not within the scope of the present invention

Polyesters are intended to denote a polymer comprising at least 50 mol %, preferably at least 85 mol % of recurring units (R_{PE}) comprising at least one ester moiety (commonly described by the formula : R-(C=O)-OR'). Polyesters may be obtained by ring opening polymerization of a cyclic monomer (M_{A}) comprising at least one ester moiety ; by polycondensation of a monomer (M_{B}) comprising at least one hydroxyl group and at least one carboxylic acid group, or by polycondensation of at least one monomer (M_{C}) comprising at least two hydroxyl groups (a diol) and at least one monomer (M_{D}) comprising at least two carboxylic acid groups (a dicarboxylic acid).

Non limitative examples of monomers (M_{A}) include lactide and caprolactone.

Non limitative examples of monomers (M_{B}) include glycolic acid, 4-hydroxybenzoic acid and 6-hydroxynaphthalene-2-carboxylic acid.

Non limitative examples of monomers (M_{C}) include 1,4-cyclohexanedimethanol, ethylene glycol, hydroquinone, 4,4-biphenol, 1,2-propanediol, 1,3-propanediol, 1,4-butanediol, 1,5-pentanediol, 1,6-hexanediol, 1,8-octanediol, 1,10-decanediol, 2,2,4-trimethyl 1,3-pentanediol, 2,2,4,4-tetramethyl-1,3-cyclobutanediol, and neopentyl glycol, while 1,4-cyclohexanedimethanol, hydroquinone, 4,4-biphenol and neopentyl glycol are preferred.

Non limitative examples of monomers (M_{D}) include terephthalic acid, isophthalic acid, naphthalene dicarboxylic acids, 1,4-cyclohexane dicarboxylic acid, succinic acid, sebacic acid, and adipic acid, while terephthalic acid and 1,4-cyclohexane dicarboxylic acid are preferred.

In certain preferred embodiment, the polyester of the polymer composition (C) comprises at least 50 mol %, preferably at least 60 mol %, more preferably at least 70 mol %, still more preferably at least 80 mol % and most preferably at least 90 mol % of recurring units (R_{PE}) comprising, in addition to the at least one ester moiety, at least one cycloaliphatic group. Excellent results were obtained when the polyester was essentially composed of recurring units comprising at least one ester moiety and at least one cycloaliphatic group. The cycloaliphatic group may derive from monomers (M_{B}), monomers (M_{C}) or monomers (M_{D}) comprising at least one group which is both aliphatic and cyclic.

In certain preferred embodiment, the polyester of the polymer composition (C) comprises at least 50 mol %, preferably at least 60 mol %, more preferably at least 70 mol %, still more preferably at least 80 mol % and most preferably at least 90 mol % of recurring units (R_{PE*}) comprising, in addition to the at least one ester moiety, at least one aromatic group. Preferably, the polyester of the polymer composition (C) contains no recurring unit other than recurring units (R_{PE*}). The aromatic group may derive from monomers (M_{A}), monomers (M_{B}), monomers (M_{C}) or monomers (M_{D}) comprising at least one aromatic group.

When the polyester is a homopolymer, it may be selected from poly(cyclohexylenedimethylene terephthalate) (PCT), poly(cyclohexylenedimethylene naphthalate) (PCN), polyethylene terephthalate (PET), polycaprolactone (PCL) and polybutylene terephtalate (PBT). Most preferably, it is PCT (i.e. a homopolymer obtained through the polycondensation of terephthalic acid with 1,4-cyclohexylenedimethanol).

### Polysulfones - not within the scope of the present invention

Sulfone polymers are intended to denote any polymer, at least 50 % moles of the recurring units (R_{SP}) thereof comprise at least one group of formula (SP) :

-Ar-SO₂-Ar'- formula (SP)

with Ar and Ar', equal to or different from each other, being aromatic groups.

Recurring units (R_{SP}) generally comply with formula :

-Ar¹-(T'-Ar²)ₙ-O-Ar³-SO₂-[Ar⁴-(T-Ar²)ₙ-SO₂]ₘ-Ar⁵-O-

wherein :
- Ar¹, Ar², Ar³, Ar⁴, and Ar⁵, equal to or different from each other and at each occurrence, are independently a aromatic mono- or polynuclear group ;
- T and T', equal to or different from each other and at each occurrence, is independently a bond or a divalent group optionally comprising one or more than one heteroatom ; preferably T and T' are independently selected from the group consisting of a bond, -CH₂-, -C(O)-, -C(CH₃)₂-, -C(CF₃)₂-, -C(=CCl₂)-, -SO₂-, and -C(CH₃)(CH₂CH₂COOH)-,
- n and m, equal to or different from each other, are independently zero or an integer of 1 to 5.

Recurring units (R_{SP}) can be notably selected from the group consisting of those of formulae (S-A) to (S-D) herein below : 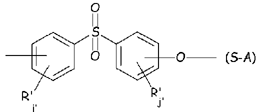 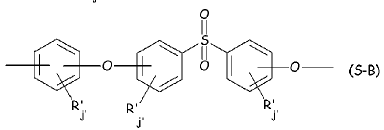 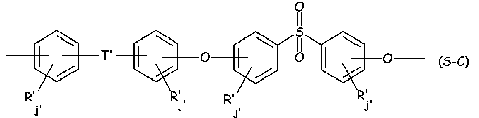 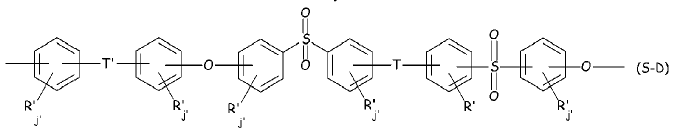 wherein :
- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- j' is zero or is an integer from 0 to 4 ;
- T and T', equal to or different from each other are defined as above.

In a preferred embodiment of the invention, at least 50 % moles of the recurring units of the sulfone polymer are recurring units (R_{SP-2}) and/or recurring units (R_{SP-3}) : 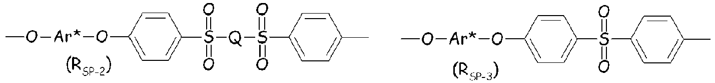 wherein :
Q and Ar*, equal or different from each other and at each occurrence, are independently a divalent aromatic group ; preferably Ar* and Q equal or different from each other and at each occurrence, are independently selected from the group consisting of the following structures : 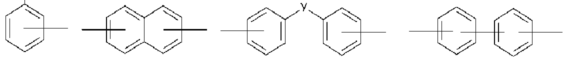 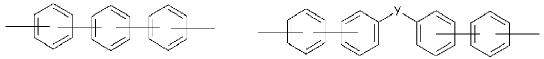 and corresponding optionally substituted structures, with Y being -O-, -CH=CH-, -C≡C-, -S-, -C(O)-, -(CH₂)ₙ-, -C(CF₃)₂-, -C(CH₃)₂-, -SO₂-, -(CF₂)ₙ-, with n being an integer from 1 to 5 and mixtures thereof ; and mixtures thereof.

Recurring units (R_{SP-2}) are preferably selected from the group consisting of : 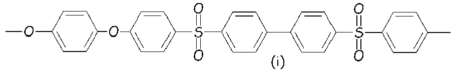 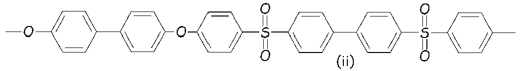 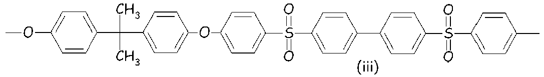 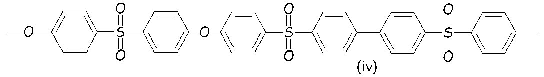 and mixtures thereof.

Recurring units (R_{SP-3}) are preferably selected from the group consisting of : 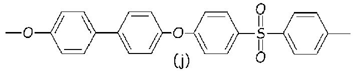 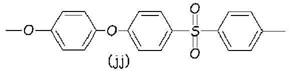 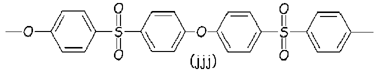 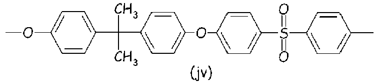 and mixtures thereof.

According to a preferred embodiment of the invention, sulfone polymers of the polymer composition (C) comprises at least 50 % moles, preferably 70 % moles, more preferably 75 % moles of recurring units (R_{SP-2}) and/or (R_{SP-3}), still more preferably, it contains no recurring unit other than recurring units (R_{SP-2}) and/or (R_{SP-3}).

In still a preferred embodiment of the invention, at least 50 % moles of the recurring units of sulfone polymer of the polymer composition (C) are recurring units (j). Preferably at least 60 % moles, more preferably at least 70 % moles, still more preferably at least 80 % moles and most preferably at least 90 % moles of the recurring units of sulfone polymer are recurring units (j). Excellent results were obtained when the sulfone polymer contained no recurring unit other than recurring units (j), such a polymer (polyphenylsulfone (PPSU) hereinafter) is notably available as RADEL® PPSU commercially available from Solvay Specialty Polymers USA, L.L.C..

In another preferred embodiment of the invention, at least 50 % moles of the recurring units of sulfone polymer of the polymer composition (C) are recurring units (jj). Preferably at least 60 % moles, more preferably at least 70 % moles, still more preferably at least 80 % moles and most preferably at least 90 % moles of the recurring units of sulfone polymer of the polymer composition (C) are recurring units (jj). Excellent results were obtained when the sulfone polymer contained no recurring unit other than recurring units (jj), such a polymer (polyethersulfone (PESU) hereinafter) is notably available as VERADEL® PESU, commercially available from Solvay Specialty Polymers USA, L.L.C..

In yet another preferred embodiment of the invention, at least 50 % moles of the recurring units of sulfone polymer of the polymer composition (C) are recurring units (jv). Preferably at least 60 % moles, more preferably at least 70 % moles, still more preferably at least 80 % moles and most preferably at least 90 % moles of the recurring units of sulfone polymer of the polymer composition (C) re recurring units (jv). Excellent results were obtained when the sulfone polymer contained no recurring unit other than recurring units (jv), such a polymer (polysulfone (PSU) hereinafter) is notably available as UDEL® PSU commercially available from Solvay Specialty Polymers USA, L.L.C..

Excellent results were obtained when the sulfone polymer was selected from the group consisting of PPSU, PESU, PSU or mixture thereof.

When only one sulfone polymer is present in the polymer composition (C), it is preferably polyphenylsulfone (PPSU). When two sulfone polymers are present in the polymer composition (C), they are preferably polyphenylsulfone (PPSU) and polysulfone (PSU).

### Polyarylene sulfides - not within the scope of the present invention

Polyarylene sulfides are intended to denote any polymer, comprising recurring units, more than 50 % moles of said recurring units are recurring units (R_{PAS}) comprising a Ar-S group, with Ar being an aromatic group. Unless otherwise specified the Ar group can be substituted or unsubstituted. Additionally, unless otherwise specified the polyphenylene sulfide can include any isomeric relationship of the sulfide linkages in polymer; e.g. when the arylene group is a phenylene group the sulfide linkages can be ortho, meta, para, or combinations thereof.

According to a preferred embodiment of the invention, the polyarylene sulfide of the polymer composition (C) comprises at least 60 % moles, preferably 70 % moles, more preferably 80 % moles of recurring units (R_{PAS}), still more preferably, it contains no recurring unit other than recurring units (R_{PAS}). Excellent results were obtained when the polyarylene sulfide contained no recurring unit other than recurring units (R_{PAS}).

Preferably, recurring units (R_{PAS}) are recurring units (p) of the following formula :

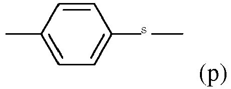

In yet another preferred embodiment of the invention, at least 50 % moles of the recurring units of the polyarylene sulfide polymer of the polymer composition (C) are recurring units (p). Preferably at least 60 % moles, more preferably at least 70 % moles, still more preferably at least 80 % moles and most preferably at least 90 % moles of the recurring units of polyarylene sulfide polymer of the polymer composition (C) re recurring units (p). Excellent results were obtained when the polyarylene sulfide polymer contained no recurring unit other than recurring units (p), such a polymer (polyphenylene sulfide (PPS) hereinafter) is notably available as Ryton® PPS commercially available from by Chevron Phillips Chemical Company LP of The Woodlands, Texas.

Some examples of other suitable polyarylene sulfide polymers include poly(2,4-toluene sulfide), poly(4,4'-biphenylene sulfide), poly(para-phenylene sulfide), poly(ortho-phenylene sulfide), poly(meta-phenylene sulfide), poly(xylene sulfide), poly(ethylisopropylphenylene sulfide), poly(tetra-methylphenylene sulfide), poly(butylcyclohexylphenylene sulfide), poly(hexyldodecylphenyfene sulfide), poly(octadecylphenyIene sulfide), poly(phenyphenylene), poly(tolylphenylene sulfide), poly(benzylphenylene sulfide), and poly[octyl-4-(3-methylcyclopentyl)phenylene sulfide.

Excellent results were obtained when the polyarylene sulfide polymer was polyphenylene sulfide (PPS).

### Polyaryletherketones - not within the scope of the present invention

Polyaryletherketone (or PAEK) is intended to denote any polymer, comprising recurring units, more than 50 % moles of said recurring units are recurring units (R_{PAEK}) comprising a Ar-C(O)-Ar' group, with Ar and Ar', equal to or different from each other, being aromatic groups. The recurring units (R_{PAEK}) are generally selected from the group consisting of formulae (J-A) to (J-O), herein below : 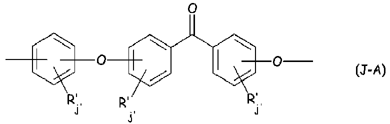 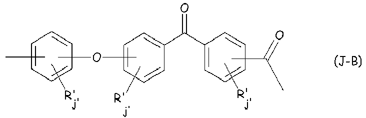 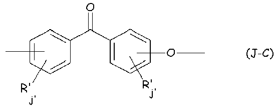 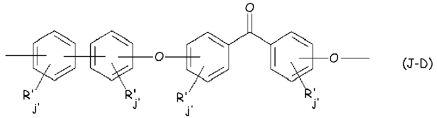 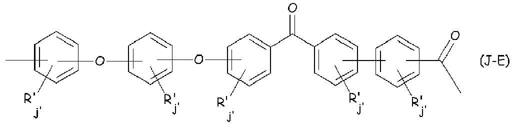 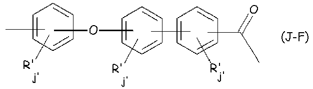 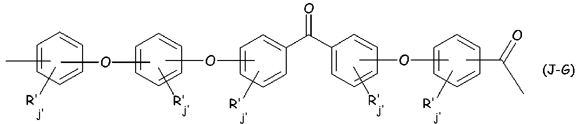 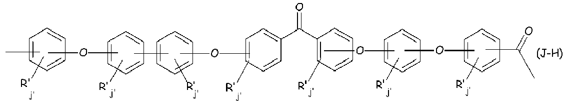 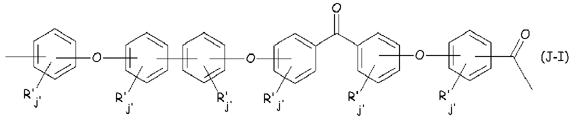 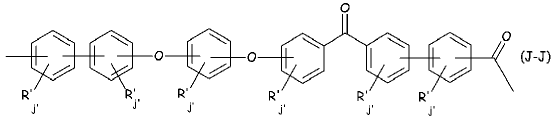 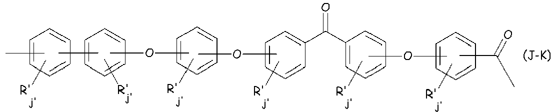 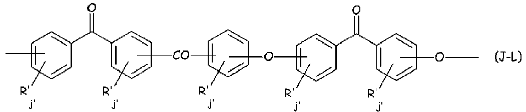 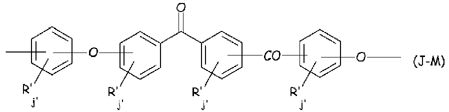 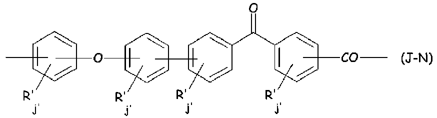 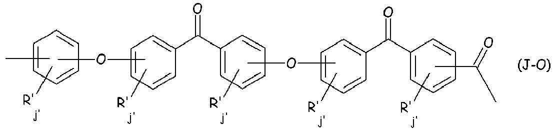 wherein :
- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- j' is zero or is an integer from 0 to 4.

In recurring unit (R_{PAEK}), the respective phenylene moieties may independently have 1,2-, 1,4- or 1,3 -linkages to the other moieties different from R' in the recurring unit. Preferably, said phenylene moieties have 1,3- or 1,4- linkages, more preferably they have 1,4-linkage.

Still, in recurring units (R_{PAEK}), j' is at each occurrence zero, that is to say that the phenylene moieties have no other substituents than those enabling linkage in the main chain of the polymer.

Preferred recurring units (R_{PAEK}) are thus selected from those of formulae (J'-A) to (J'-O) herein below :

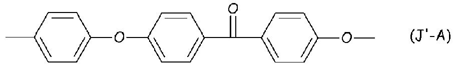

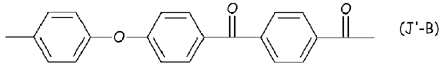

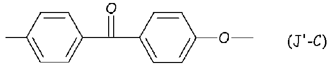

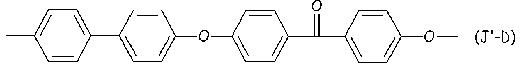

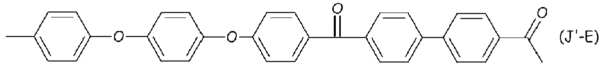

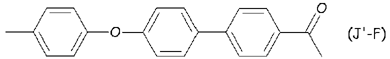

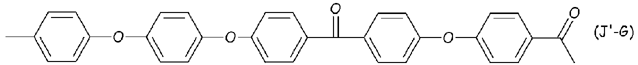

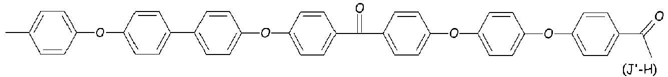

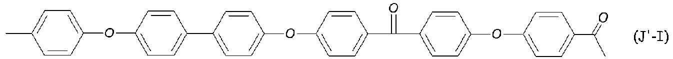

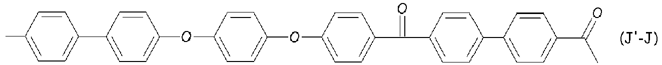

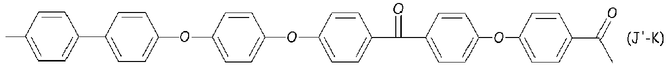

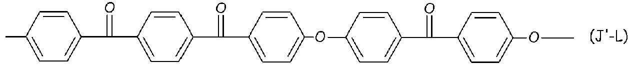

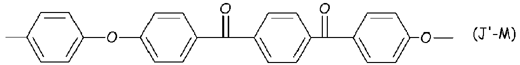

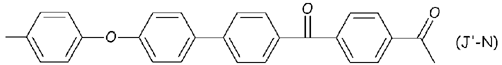

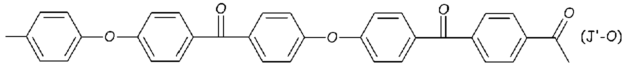

In the PAEK polymer, as detailed above, preferably more than 60 %, more preferably more than 80 %, still more preferably more than 90 % moles of the recurring units are recurring units (R_{PAEK}), as above detailed.

Still, it is generally preferred that substantially all recurring units of the PAEK polymer are recurring units (R_{PAEK}), as detailed above.

The PAEK polymer may be notably a homopolymer, a random, alternate or block copolymer. When the PAEK polymer is a copolymer, it may notably contain (i) recurring units (R_{PAEK}) of at least two different formulae chosen from formulae (J-A) to (J-O), or (ii) recurring units (R_{PAEK}) of one or more formulae (J-A) to (J-O) and recurring units (R*_{PAEK}) different from recurring units (R_{PAEK}).

As will be detailed later on, the PAEK polymer may be a polyetheretherketone polymer (or PEEK polymers).

For the purpose of the present invention, the term "PEEK polymer" is intended to denote any polymer of which more than 50 % by moles of the recurring units are recurring units (R_{PAEK}) of formula J'-A.

Preferably more than 75 % by moles, preferably more than 85 % by moles, preferably more than 95 % by moles, preferably more than 99 % by moles of the recurring units of the PEEK polymer are recurring units of formula J'-A. Most preferably all the recurring units of the PEEK polymer are recurring units of formula J'-A.

Alternatively, the PAEK polymer may be a polyetherketoneketone polymer (or PEKK polymer), a polyetherketone polymer (or PEK polymer), a polyetheretherketoneketone polymer (or PEEKK polymer), or a polyetherketoneetherketoneketone polymer (PEKEKK polymer).

For the purpose of the present invention, the term "PEKK polymer" is intended to denote any polymer of which more than 50 % by moles of the recurring units are recurring units (R_{PAEK}) of formula J'-B.

Preferably more than 75 % by moles, preferably more than 85 % by moles, preferably more than 95 % by moles, preferably more than 99 % by moles of the recurring units of the PEKK polymer are recurring units of formula J'-B. Most preferably all the recurring units of the PEKK polymer are recurring units of formula J'-B.

For the purpose of the present invention, the term "PEK polymer" is intended to denote any polymer of which more than 50 % by moles of the recurring units are recurring units (R_{PAEK}) of formula J'-C.

Preferably more than 75 % by moles, preferably more than 85 % by moles, preferably more than 95 % by moles, preferably more than 99 % by moles of the recurring units of the PEK polymer are recurring units of formula J'-C. Most preferably all the recurring units of the PEK polymer are recurring units of formula J'-C.

For the purpose of the present invention, the term "PEEKK polymer" is intended to denote any polymer of which more than 50 % by moles of the recurring units are recurring units (R_{PAEK}) of formula J'-M.

Preferably more than 75 % by moles, preferably more than 85 % by moles, preferably more than 95 % by moles, preferably more than 99 % by moles of the recurring units of the PEEKK polymer are recurring units of formula J'-M. Most preferably all the recurring units of the PEEKK polymer are recurring units of formula J'-M.

For the purpose of the present invention, the term "PEKEKK polymer" is intended to denote any polymer of which more than 50 % by moles of the recurring units are recurring units (R_{PAEK}) of formula J'-L.

Preferably more than 75 % by moles, preferably more than 85 % by moles, preferably more than 95 % by moles, preferably more than 99 % by moles of the recurring units of the PEKEKK polymer are recurring units of formula J'-L. Most preferably all the recurring units of the PEKEKK polymer are recurring units of formula J'-L.

Excellent results were obtained when the PAEK polymer was a PEEK homopolymer, i.e. a polymer of which substantially all the recurring units of the PEEK polymer are recurring units of formula J'-A, notably commercially available as KETASPIRE® polyetheretherketone from Solvay Specialty Polymers USA, L.L.C.

The polymer composition (C) according to the present invention comprising preferably only one or a mixture of two of the above described polymers.

Preferably, the polymer composition (C) does not comprise a mixture of (i) at least one polyaryletherketone (PAEK), (ii) at least one polyphenylsulfone (PPSU) and (iii) at least one polysulfone (PSU). Also, the polymer composition (C) advantageously does not comprise a mixture of at least one polyphenylsulfone (PPSU) and at least one polysulfone (PSU). Preferably, the polymer composition (C) does not comprise a mixture of at least one polyaryletherketone (PAEK) and at least one polysulfone (PSU).

### The glass fibers

In addition to the above described polymers, the polymer composition (C) also comprises at least one specific glass fiber having a non-circular cross section and an elastic modulus of at least 76 GPa as measured according to ASTM C1557-03.

The glass fibers of the polymer composition (C) have a non-circular cross section (so called "flat glass fibers"), including oval, elliptical or rectangular.

The glass fibers may be added as endless fibers or as chopped glass fibers, whereas chopped glass fibers with a length ranging preferably from about 2 to about 13 mm, more preferably from about 3 to about 6 mm are preferred.

The glass fibers of the polymer composition (C) feature preferably a specific size and aspect ratio. Fig. 1 is a schematic view showing the aspect ratio of the glass fiber according to one embodiment.

The glass fibers of the polymer composition (C) have generally a cross-sectional longest diameter (a) of at least 15 µm, preferably at least 20 µm, more preferably at least 22 µm, still more preferably at least 25 µm. It is advantageously of at most 40 µm, preferably at most 35 µm, more preferably at most 32 µm, still more preferably at most 30 µm. Excellent results were obtained when the cross-sectional diameter was in the range of 15 to 35 µm, preferably of 20 to 30 µm and more preferably of 25 to 29 µm.

The glass fibers of the polymer composition (C) have generally a cross-sectional shortest diameter (b) of at least 4 µm, preferably at least 5 µm, more preferably at least 6 µm, still more preferably at least 7 µm. It is advantageously of at most 25 µm, preferably at most 20 µm, more preferably at most 17 µm, still more preferably at most 15 µm. Excellent results were obtained when the cross-sectional shortest diameter (b) was in the range of 5 to 20 preferably of 5 to 15 µm and more preferably of 7 to 11 µm.

The glass fiber of the polymer composition (C) may have an aspect ratio of at least 2, preferably at least 2.2, more preferably at least 2.4, still more preferably at least 3. Referring to Fig. 1, the aspect ratio is defined as a ratio of the longest diameter (a) in the cross-section of the glass fiber against the shortest diameter (b) thereof. Also, the aspect ratio of the glass fibers of the polymer composition (C) is of at most 8, preferably at most 6, more preferably of at most 4. Excellent results were obtained when said ratio was of from about 2 to about 6, and preferably, from about 2.2 to about 4.

The shape of the cross-section of the glass fiber, its length, its cross-sectional diameter and its aspect ratio can be easily determined using optical microscopy. For example, the aspect ratio of the fiber cross-section was determined using an Euromex optical microscope and an image analysis software (Image Focus 2.5) by measuring the largest (width) and smallest (height) dimensions of the fiber cross-section and dividing the first number by the second number.

The glass fibers of the polymer composition (C) have an elastic modulus of at least 76 GPa as measured according to ASTM C1557-03, preferably at least 78, more preferably at least 80, even more preferably at least 82 and most preferably at least 84 GPa, as measured according to ASTM C1557-03.

Also, the glass fibers of the polymer composition (C) have a tensile strength of at least 3.5 GPa as measured according to ASTM C1557-03, preferably at least 3.6, more preferably at least 3.7, even more preferably at least 3.8 and most preferably at least 3.9 GPa, as measured according to ASTM C1557-03.

This level of elastic modulus and tensile strength is typically reached when using a specific chemical composition of the glass used to manufacture the glass fibers. Glass is a silica-based glass compound that contain several metal oxides which can be tailored to create different types of glasses. The main oxide is silica in the form of silica sand ; the other oxides such as calcium, sodium and aluminum are incorporated to reduce the melting temperature and impede crystallization. It is well known in the art that when using a glass with a high loading of Al₂O₃, the glass fiber derived therefrom exhibit a high elastic modulus. In particular, those glass fibers comprise typically from 55-75 wt. % of SiO₂, from 16-28 wt. % of Al₂O₃ and from 5-14 wt. % of MgO, based on the total weight of the glass composition. To the contrary of the regular E-glass fibers widely used in polymer compositions, the high modulus glass fibers comprise less than 5 wt. % of B₂O₃, preferably less than 1 wt. %.

The glass fiber of the polymer composition (C) may be manufactured by well known techniques such as the one described in US 4,698,083 using a glass composition featuring a high loading of Al₂O₃, typically from 16-28 wt. % of Al₂O₃, based on the total weight of the glass composition.

According to one embodiment, the glass fiber may be coated with a predetermined material on a surface thereof in order to prevent reaction with the polymer(s) and other ingredients of the polymer composition (C) and improve the degree of impregnation. The coating material may change overall fluidity, impact strength, and the like of a glass fiber-reinforced polymer composition. Suitable materials for coating glass fiber and affecting the fluidity, impact strength, and the like of a glass fiber-reinforced polymer composition are well-known to a person of ordinary skill in the art and may be selected without undue experimentation depending on the desired properties of the resultant composition.

In addition to the above mentioned glass fiber having a non-circular cross section and an elastic modulus of at least 76 GPa as measured according to ASTM C1557-03, the polymer composition (C) may further comprise additional reinforcing fillers, which may be fibrous or particulate fillers.

Preferably, the additional reinforcing filler is selected from mineral fillers (such as talc, mica, kaolin, calcium carbonate, calcium silicate, magnesium carbonate), glass fiber (different from the above mentioned glass fiber), carbon fibers, synthetic polymeric fiber, aramid fiber, aluminum fiber, titanium fiber, magnesium fiber, boron carbide fibers, rock wool fiber, steel fiber, wollastonite, etc. Still more preferably, it is selected from mica, kaolin, calcium silicate, magnesium carbonate, wollastonite and glass fibers different from the above mentioned glass fiber having a non-circular cross section and a specific elastic modulus.

In the polymer composition (C), the glass fiber having a non-circular cross section and an elastic modulus of at least 76 GPa as measured according to ASTM C1557-03 is present in an amount of advantageously at least 10 wt. %, preferably at least 20 wt. %, more preferably at least 15 wt. %, still more preferably at least 25 wt. %, even more preferably at least 30 wt. %, yet even more preferably at least 35 wt. %, and most preferably at least 40 wt. %, based on the total weight of the polymer composition (C).

Said glass fiber is also present in an amount of advantageously at most 80 wt. %, preferably at most 75 wt. %, more preferably at most 70 wt. %, still more preferably at most 65 wt. %, even more preferably at most 60 wt. %, and most preferably at most 55 wt. %, based on the total weight of the polymer composition (C).

Preferably, the glass fiber having a non-circular cross section and an elastic modulus of at least 76 GPa as measured according to ASTM C1557-03 is present in an amount ranging from 30 to 70 wt. %, more preferably from 35 to 65 wt. %, still more preferably from 40 to 60 wt. % and most preferably from 45 to 55 wt. %, based on the total weight of the polymer composition (C).

Excellent results were obtained when the reinforcing filler was present in an amount of about 50 wt. %, based on the total weight of the polymer composition (C).

### Other optional ingredients

The polymer composition (C) may further optionally comprise additional additives such as ultraviolet light stabilizers, heat stabilizers, antioxidants, pigments, processing aids, lubricants, flame retardants, and/or conductivity additive such as carbon black and carbon nanofibrils.

The polymer composition (C) may also further comprise other polymers than the above described polymer.

The polymer composition (C) may further comprise flame retardants such as halogen and halogen free flame retardants.

The preparation of the polymer composition (C) can be carried out by any known melt-mixing process that is suitable for preparing thermoplastic molding compositions. Such a process is typically carried out by heating the thermoplastic polymer above the melting temperature of the thermoplastic polymer thereby forming a melt of the thermoplastic polymer.

A further aspect of the present invention is thus related to a process for making the polymer composition (C) comprising melting the at least one polymer before mixing the glass fiber to the melted polymer. The process for the preparation of the composition (C) can be carried out in a melt-mixing apparatus, for which any melt-mixing apparatus known to the one skilled in the art of preparing polymer compositions by melt mixing can be used. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the polymer composition (C) the constituting components for forming the composition are fed to the melt-mixing apparatus and melt-mixed in that apparatus. The constituting components may be fed simultaneously as a powder mixture or granule mixer, also known as dry-blend, or may be fed separately.

### The article

The polymer composition (C) is well suited for the manufacture of certain shaped articles and in particular parts of mobile electronic devices.

The term "mobile electronic device" is intended to denote an electronic device that is designed to be conveniently transported and used in various locations. Representative examples of mobile electronic devices may be selected from the group consisting of mobile electronic phones, personal digital assistants, laptop computers, tablet computers, radios, cameras and camera accessories, watches, calculators, music players, global positioning system receivers, portable games, hard drives and other electronic storage devices.

Preferred mobile electronic devices are laptop computers, tablet computers and mobile electronic phones.

The at least one part of the mobile electronic device according to the present invention may be selected from a large list of articles such as fitting parts, snap fit parts, mutually moveable parts, functional elements, operating elements, tracking elements, adjustment elements, carrier elements, frame elements, switches, connectors, cables, housings, and any other structural part other than housings as used in a mobile electronic devices, such as for example speaker parts. Said mobile electronic device parts can be notably produced by injection molding, extrusion or other shaping technologies.

By "mobile electronic device housing" is meant one or more of the back cover, front cover, antenna housing, frame and/or backbone of a mobile electronic device. The housing may be a single article or comprise two or more components. By "backbone" is meant a structural component onto which other components of the device, such as electronics, microprocessors, screens, keyboards and keypads, antennas, battery sockets, and the like are mounted. The backbone may be an interior component that is not visible or only partially visible from the exterior of the mobile electronic device. The housing may provide protection for internal components of the device from impact and contamination and/or damage from environmental agents (such as liquids, dust, and the like). Housing components such as covers may also provide substantial or primary structural support for and protection against impact of certain components having exposure to the exterior of the device such as screens and/or antennas.

In a preferred embodiment, the mobile electronic device housing is selected from the group consisting of a mobile phone housing, a tablet housing, a laptop computer housing and a tablet computer housing. Excellent results were obtained when the part of the mobile electronic device according to the present invention was a mobile phone housing and a laptop computer housing.

The at least one part of the mobile electronic device according to the present invention is advantageously characterized by a thickness of a flat portion of said part being 2.0 mm or less, preferably 1.6 mm or less, more preferably 1.2 mm or less, still more preferably 0.8 mm or less on average. The term "on average" is herein intended to denote the average thickness of the part based on the measurement of its thickness on at least 3 points of at least one of its flat portions.

The article such as the mobile electronic devices according to the present invention are made from the polymer composition (C) using any suitable melt-processing method. In particular, they are made by injection molding or extrusion molding. Injection molding is a preferred method.

A last aspect of the present invention is thus directed to a process for making the article of the present invention, preferably using injection molding.

Should the disclosure of any patents, patent applications, and publications which are incorporated herein by reference conflict with the description of the present application to the extent that it may render a term unclear, the present description shall take precedence.

### EXAMPLES

The invention will be now described in more details with reference to the following examples, whose purpose is merely illustrative and not intended to limit the scope of the invention.

### Raw materials

**Polyamide 1** (PA1) : PA6,6 obtained through the polymerization of hexamethylene diamine and adipic acid, commercially available from the RADICI GROUP as RADIPOL® A45.

**Polyamide 2** (PA2) : PA MXD6 obtained through the polymerization of meta-xylylene diamine and adipic acid, commercially available from SOLVAY SPECIALTY POLYMERS USA, LLC as IXEF® PARA.

**Polyamide 3** (PA3): PA 6,10 obtained through the polymerization of hexamethylene diamine and sebacic acid, commercially available from the RADICI GROUP as RADIPOL® DC 45 D.

**Glass fiber** 1 (GF1) : chopped flat fibers made of a high modulus glass having an aspect ratio of 3.1, a strand length of 3 mm and an elastic modulus of 85 GPa as measured according to ASTM C1557-03. The dimensions of the fibers (as well as the following ones) was determined using an Euromex optical microscope and an image analysis software (Image Focus 2.5) by measuring the largest (width) and smallest (height) dimensions of the fiber cross-section and dividing the first number by the second number.

**Glass fiber** 2 (GF2) : chopped flat fibers having an aspect ratio of 2.4, a nominal strand length of 3 mm and an elastic modulus of 85 GPa as measured according to ASTM C1557-03.

**Glass fiber** 3 (GF3) : chopped flat fibers having an aspect ratio of 4, a nominal strand length of 3 mm, an aminosilane sizing and an elastic modulus of 75 GPa as measured according to ASTM C1557-03, commercially available as NITTOBO CSG3PA-820 from NITTO BOSEKI, Japan.

**Glass fiber 4** (GF4) : chopped circular fibers having a cross-sectional diameter of 10 µm, a strand length of 4.5 mm, an aminosilane sizing and an elastic modulus of 75 GPa as measured according to ASTM C1557-03, commercially available as OCV™ EC10 4.5mm 995 from OWENS CORNING.

**Glass fiber 5** (GF5) : chopped circular fibers having a cross-sectional diameter of 10 µm, a strand length of 4.7 mm, an aminosilane sizing and an elastic modulus of 88 GPa as measured according to ASTM C1557-03, commercially available as OCV™ CS HP XSS PAX95 from OWENS CORNING.

**Glass fiber 6** (GF6) : chopped circular fibers having a cross-sectional diameter of 6 µm, a nominal strand length of 3 mm, an aminosilane sizing and an elastic modulus of 85 GPa as measured according to ASTM C1557-03.

**Pigments** : Plasblack UN 2014 (50 % carbon black based masterbatch). Lubricant: Ca stearate, Ceasit-1 from Barlocher.

### General description of the compounding process of the polymer compositions

The polyamide resins described above were fed to the first barrel of a ZSK-30 twin screw extruder comprising 10 zones via a loss in weight feeder. The barrel settings were in the range of 260-290°C and the resins were melted before zone 5. The other ingredients were fed at zone 8 through a side stuffer via a loss in weight feeder. The screw rate was 300 rpm. The extrudates were cooled and pelletized using conventional equipment. The results are summarized in Table 1, indicating each of the resins used, and the amount of each ingredient given in weight %.

**Table 1: List of ingredients of the prepared compositions (in %)**

| | *CE1* | *CE2* | *CE3* | *CE4* | ***E1*** | ***E2*** | *CE5* | ***E3*** |
|---|---|---|---|---|---|---|---|---|
| *PA1* | 39.1 | 39.1 | 39.1 | 39.1 | 39.1 | 39.1 | - | - |
| *PA2* | 10.0 | 10.0 | 10.0 | 10.0 | 10.0 | 10.0 | - | - |
| *PA3* | - | - | - | - | - | - | 44.1 | 44.1 |
| *GF1* | - | - | - | - | 50.0 | - | - | 55.0 |
| *GF2* | - | - | - | - | - | 50.0 | - | - |
| *GF3* | 50.0 | - | - | - | - | - | 55.0 | - |
| *GF4* | - | 50.0 | - | - | - | - | - | - |
| *GF5* | - | - | 50.0 | - | - | - | - | - |
| *GF6* | - | - | - | 50.0 | - | - | - | - |
| *pigments* | 0.8 | 0.8 | 0.8 | 0.8 | 0.8 | 0.8 | 0.8 | 0.8 |
| *lubricant* | 0.1 | 0.1 | 0.1 | 0.1 | 0.1 | 0.1 | 0.1 | 0.1 |

The mechanical properties of the polymer compositions prepared were tested according to ISO standards. For the preparation of the test specimen an Axxicon AIM mould was used, tensile bars were prepared using the ISO 1A insert. For impact and flexural evaluations ISO B insert was used. Samples were moulded on Engel e-motion 200/100, using a 290°C material and a 120°C mould temperature. The anisotropy and mould shrinkage measurement were measured on bar of 40^{∗}20mm having nominal thicknesses of 1 and 2mm. The reported shrinkage values were obtained on bars moulded using 750 bars pressure.

The various ISO test methods employed were ISO 527-4 for tensile properties, ISO 178 for flexural properties and ISO 180/1A for notched and unnotched Izod impact.

Spiral flow data were determined using a Fanuc 100 ton electrical moulding machine. Materials are injected in 1mm thick cavity at 280°C material and 130°C mould temperature. The reported length is the length reached at 1000 bars injection pressure.

The mechanical, shrinkage and flow properties are summarized in Table 2.

**Table 2 : Results**

| | CE1 | CE2 | CE3 | CE4 | **E1** | **E2** | CE5 | **E3** |
|---|---|---|---|---|---|---|---|---|
| Tensile Strength (MPa) | 237 | 239 | 270 | 284 | **259** | **265** | 226 | **245** |
| Tensile Modulus (GPa) | 16.84 | 17.25 | 19.0 | 19.3 | **18.5** | **19.1** | 17.9 | **18.8** |
| Tensile Elongation (%) | 2.33 | 2.43 | 2.76 | 2.75 | **2.38** | **2.57** | 2.52 | **2.63** |
| Flexural Strength (MPa) | 345 | 353 | 400 | 407 | **392** | **386** | 331 | **367** |
| Flexural Modulus (GPa) | 15.48 | 15.7 | 17.3 | 17.4 | **17.5** | **17.6** | 15.8 | **17.6** |
| Flexural Elongation (%) | 2.80 | 2.95 | 3.27 | 3.12 | **2.92** | **2.91** | 3.17 | **3.25** |
| Notched Izod Impact (kJ/m2) | 14.19 | 12.9 | 15.7 | 13.8 | **17.6** | **17.8** | 21.8 | **23.6** |
| Unnotched Izod Impact (kJ/m2) | 66.77 | 81 | 89 | 76 | **76** | **76** | 93 | **95** |
| Weldline Strength (MPa) | 87.45 | 86.80 | 78 | 82 | **86** | **88** | 71 | **73** |
| Anisotropy (%) on 2 mm thick parts | 0.23 | 0.35 | 0.32 | 0.35 | **0.23** | **0.25** | 0.22 | **0.20** |
| Anisotropy (%) on 1 mm thick parts | 0.21 | 0.35 | 0.28 | 0.37 | **0.22** | **-** | 0.19 | **0.18** |
| Spiral Flow (mm) - at 50mm/s | 103 | 90 | 85 | - | **102** | **105** | - | - |
| Spiral Flow (mm)- at 100mm/s | 110 | 95 | 85 | - | **110** | **110** | - | - |
| Spiral Flow (mm) - at 200mm/s | 130 | 115 | 100 | - | **130** | **130** | - | - |

From the data presented in Table 2, one can see that examples CE1 and CE5 comprising chopped flat fibers having an aspect ratio of 4 and an elastic modulus of 75 GPa provide some interesting properties in terms of flow and warpage but fail to reach the minimum level of mechanical properties required for the highly demanding mobile electronic device applications.

Examples CE2, CE3 and CE4 comprising different kinds of chopped circular fibers are not satisfactory since they all fail to solve the warpage issue, not to mention that they all present significant processing hurdles due to their low flow.

On the other side, examples E1, E2 and E3 (according to the present invention) comprising chopped flat fibers made of a high modulus glass (with an elastic modulus of 85 GPa) show superior properties in terms of mechanical, warpage and flow.

In particular, they all present an extraordinary balance of properties such as impact, tensile and flexural properties coupled to very low anisotropy and exceptional flow which make them candidates of choice for the manufacture of parts of mobile electronic devices.

## Claims

1. A polymer composition (C) comprising :
- at least 20 weight percent of at least one polymer, and
- at least 20 weight percent of glass fibers, based on the total weight of the polymer composition (C) ;
wherein the glass fibers have a non-circular cross section and an elastic modulus of at least 76 GPa as measured according to ASTM C1557-03,
wherein said at least one polymer is selected from the group consisting of
(1) a blend of a first and a second polyamide, wherein the first polyamide is selected from aliphatic polyamides and the second polyamide is selected from aromatic polyamides,
wherein said aromatic polyamide is a polyamide which comprises more than 35 mol %, of recurring units (R_{PA}) which are aromatic recurring units that comprises at least one aromatic group; and
wherein said aliphatic polyamide is a polyamide that comprises aliphatic recurring units exclusively and said aliphatic recurring units are derived from at least one aliphatic dicarboxylic acid, and at least one aliphatic diamine, and/or said aliphatic recurring units are derived from aliphatic aminocarboxylic acids and/or aliphatic lactams; and
(2) a polyamide PA6,10.

2. The polymer composition (C) according to claim 1, wherein in the said blend, the said aromatic polyamide consists essentially of recurring units formed by polycondensation reaction between adipic acid and meta-xylylene diamine.

3. The polymer composition (C) according to claim 1 or 2, wherein in the said blend, the aliphatic polyamide is selected from the group consisting of PA6, PA 6,6, PA10,10, PA6,10, copolyamide PA 6,6/6, PA 11, PA 12 and PA 10,12.

4. The polymer composition (C) according to any one of the preceding claims, wherein the glass fibers has an aspect ratio of from 2 to 6.

5. The polymer composition (C) according to any one of the preceding claims, wherein the glass fibers is present in an amount ranging from 30 to 70 wt. %, based on the total weight of the polymer composition (C).

6. A process for making the polymer composition (C) according to any one of the preceding claims comprising melting the at least one polymer before mixing the glass fiber to the melted polymer.

7. An article comprising the polymer composition (C) according to any one of claims 1-5.

8. The article according to claim 7, said article being part of a mobile electronic device.

9. The part of a mobile electronic device according to claim 8, wherein the mobile electronic device is selected from the group consisting of mobile electronic phones, personal digital assistants, laptop computers, tablet computers, radios, cameras, watches, calculators, music players, global positioning system receivers, portable games, hard drives and other electronic storage devices.

10. A process for making the article according to any one of claims 7-9.

## Patentansprüche

1. Polymerzusammensetzung (C), umfassend:
- wenigstens 20 Gewichtsprozent an wenigstens einem Polymer und
- wenigstens 20 Gewichtsprozent Glasfasern, bezogen auf das Gesamtgewicht der Polymerzusammensetzung (C);
wobei die Glasfasern einen nicht-kreisförmigen Querschnitt und einen Elastizitätsmodul von wenigstens 76 GPa, wie gemessen gemäß ASTM C1557-03, aufweisen,
wobei das wenigstens eine Polymer ausgewählt ist aus der Gruppe bestehend aus
(1) einem Gemisch von einem ersten und einem zweiten Polyamid, wobei das erste Polyamid ausgewählt ist aus aliphatischen Polyamiden und das zweite Polyamid ausgewählt ist aus aromatischen Polyamiden,
wobei das aromatische Polyamid ein Polyamid ist, das mehr als 35 mol-% an Wiederholungseinheiten (R_{PA}) umfasst, die aromatische Wiederholungseinheiten sind, die wenigstens eine aromatische Gruppe umfassen; und
wobei das aliphatische Polyamid ein Polyamid ist, das ausschließlich aliphatische Wiederholungseinheiten umfasst und die aliphatischen Wiederholungseinheiten von wenigstens einer aliphatischen Dicarbonsäure und wenigstens einem aliphatischen Diamin abgeleitet sind und/oder die aliphatischen Wiederholungsgeinheiten von aliphatischen Aminocarbonsäuren und/oder aliphatischen Lactamen abgeleitet sind; und
(2) einem Polyamid PA 6.10.

2. Polymerzusammensetzung (C) gemäß Anspruch 1, wobei in dem Gemisch das aromatische Polyamid im Wesentlichen aus Wiederholungseinheiten besteht, die durch eine Polykondensationsreaktion zwischen Adipinsäure und meta-Xylylendiamin gebildet sind.

3. Polymerzusammensetzung (C) gemäß Anspruch 1 oder 2, wobei in dem Gemisch das aliphatische Polyamid ausgewählt ist aus der Gruppe bestehend aus PA 6, PA 6.6, PA 10.10, PA 6.10, Copolyamid PA 6.6/6, PA 11, PA 12 und PA 10.12.

4. Polymerzusammensetzung (C) gemäß einem der vorstehenden Ansprüche, wobei die Glasfasern ein Aspektverhältnis von 2 bis 6 aufweisen.

5. Polymerzusammensetzung (C) gemäß einem der vorstehenden Ansprüche, wobei die Glasfasern in einer Menge in dem Bereich von 30 bis 70 Gew.-%, bezogen auf das Gesamtgewicht der Polymerzusammensetzung (C), vorhanden sind.

6. Verfahren zur Herstellung der Polymerzusammensetzung (C) gemäß einem der vorstehenden Ansprüche, umfassend Schmelzen des wenigstens einen Polymers vor dem Mischen der Glasfasern zu dem geschmolzenen Polymer.

7. Gegenstand, umfassend die Polymerzusammensetzung (C) gemäß einem der Ansprüche 1-5.

8. Gegenstand gemäß Anspruch 7, wobei der Gegenstand Teil einer mobilen elektronischen Vorrichtung ist.

9. Teil einer mobilen elektronischen Vorrichtung gemäß Anspruch 8, wobei die mobile elektronische Vorrichtung ausgewählt ist aus der Gruppe bestehend aus elektronischen Mobiltelefonen, Personal Digital Assistants, Laptop-Computern, Tablet-Computern, Radios, Kameras, Uhren, Rechnern, Musikabspielgeräten, Global-Positioning-System-Empfängern, tragbaren Spielvorrichtungen, Festplatten und anderen elektronischen Speichervorrichtungen.

10. Verfahren zur Herstellung des Gegenstands gemäß einem der Ansprüche 7-9.

## Revendications

1. Composition de polymère (C) comprenant :
- au moins 20 pour cent en poids d'au moins un polymère, et
- au moins 20 pour cent en poids de fibres de verre, sur la base du poids total de la composition de polymère (C) ;
les fibres de verre possédant une section transversale non circulaire et un module d'élasticité d'au moins 76 GPa tel que mesuré conformément à la norme ASTM C1557-03,
ledit au moins un polymère étant choisi dans le groupe constitué par :
(1) un mélange d'un premier et d'un deuxième polyamide, le premier polyamide étant choisi parmi des polyamides aliphatiques et le deuxième polyamide étant choisi parmi des polyamides aromatiques,
ledit polyamide aromatique étant un polyamide qui comprend plus de 35 % en moles de motifs répétitifs (R_{PA}) qui sont des motifs répétitifs aromatiques qui comprennent au moins un groupe aromatique ; et
ledit polyamide aliphatique étant un polyamide qui comprend exclusivement des motifs répétitifs aliphatiques et lesdits motifs répétitifs aliphatiques étant issus d'au moins un acide dicarboxylique aliphatique, et d'au moins une diamine aliphatique, et/ou lesdits motifs répétitifs aliphatiques étant issus d'acides aminocarboxyliques aliphatiques et/ou de lactames aliphatiques ; et
(2) un polyamide PA 6.10.

2. Composition de polymère (C) selon la revendication 1, dans laquelle, dans ledit mélange, ledit polyamide aromatique est essentiellement constitué de motifs répétitifs formés par une réaction de polycondensation entre l'acide adipique et la méta-xylylène diamine.

3. Composition de polymère (C) selon la revendication 1 ou 2, dans laquelle, dans ledit mélange, le polyamide aliphatique est choisi dans le groupe constitué par le PA 6, le PA 6.6, le PA 10.10, le PA 6.10, le copolyamide PA 6.6/6, le PA 11, le PA 12 et le PA 10.12.

4. Composition de polymère (C) selon l'une quelconque des revendications précédentes, les fibres de verre possédant un rapport d'aspect de 2 à 6.

5. Composition de polymère (C) selon l'une quelconque des revendications précédentes, les fibres de verre étant présentes en une quantité se situant dans la plage de 30 à 70 % en poids, sur la base du poids total de la composition de polymère (C).

6. Procédé de préparation de la composition de polymère (C) selon l'une quelconque des revendications précédentes comprenant la fusion de l'au moins un polymère avant le mélange des fibres de verre avec le polymère fondu.

7. Article comprenant la composition de polymère (C) selon l'une quelconque des revendications 1 à 5.

8. Article selon la revendication 7, ledit article étant une partie d'un dispositif électronique mobile.

9. Partie d'un dispositif électronique mobile selon la revendication 8, le dispositif électronique mobile étant choisi dans le groupe constitué par les téléphones électroniques mobiles, les assistants numériques personnels, les ordinateurs portables, les ordinateurs tablettes, les radios, les appareils photographiques, les montres, les calculatrices, les lecteurs de musique, les récepteurs de système de positionnement par satellite, les jeux portables, les disques durs et d'autres dispositifs électroniques de stockage.

10. Procédé pour la préparation de l'article selon l'une quelconque des revendications 7 à 9.
